# FASCICULE DE BREVET EUROPEEN

(11) **EP 3 918 511 B1**
(45) Date de publication et mention de la délivrance du brevet: **17.05.2023**
(21) Numéro de dépôt: 20701811.0
(22) Date de dépôt: 31.01.2020
(51) Int. Cl.: G06K 7/10

(54) **PROCÉDÉ D'ACQUISITION D'IMAGES DE CODES MARQUÉS SUR UNE PLURALITÉ DE FEUILLES TRANSPARENTES ET INSTALLATION CORRESPONDANTE**
VERFAHREN ZUR ERFASSUNG VON BILDERN VON AUF EINER VIELZAHL VON TRANSPARENTEN BLÄTTERN MARKIERTEN CODES UND ENTSPRECHENDE INSTALLATION
METHOD FOR ACQUIRING IMAGES OF CODES MARKED ON A PLURALITY OF TRANSPARENT SHEETS, AND CORRESPONDING INSTALLATION

(30) Priorité: 31.01.2019 FR 1900891
(43) Date de publication de la demande: 08.12.2021
(73) Titulaire: Saint-Gobain Glass France, 92400 Courbevoie (FR)
(72) Inventeur: COSTANTINI, Daniele, 75005 PARIS (FR); LAUDEREAU, Jean-Baptiste, 75015 PARIS (FR); DURON, Didier, 92100 BOULOGNE BILLANCOURT (FR)
(74) Mandataire: Saint-Gobain Recherche
(86) Numéro de dépôt international: PCT/EP2020/052416
(87) Numéro de publication internationale: WO 2020/157272

(56) Documents cités:
- WO-A1-91/10968
- WO-A1-2015/121549
- JP-A- 2011 141 724

## Description

La présente invention concerne la lecture de codes marqués sur des feuilles transparentes, par exemple des feuilles de verre, et plus particulièrement sur une pluralité de feuilles transparentes disposées en regard les unes des autres.

Certaines feuilles transparentes comme les feuilles de verre sont fabriquées sous la forme d'un ruban continu, par exemple dans le cas du verre un ruban continu de verre flotté.

Ce ruban est ensuite découpé en feuilles de verre dits « motherglass » (littéralement « verre mère » en français même si ce terme n'est pas utilisé) ; lesquelles feuilles sont par exemple des « PLF » (Plateaux de verre Large Format), typiquement de dimensions 3,21m par environ 6m ou des « DLF » de dimensions environ 2,55m par 3,21m.

Ces feuilles de verre de grandes dimensions peuvent ensuite être découpées en feuilles de verre de dimensions plus petites, formant par exemple des primitifs pour la découpe de morceaux de verre de formes plus ou moins complexes.

Pour assurer leur traçabilité, ces feuilles de verre de plus ou moins grande taille peuvent être marquées à l'aide d'un identifiant ou code, par exemple en une dimension (i.e. de type « code-barre » ou analogue) ou en deux dimensions (i.e. de type « Datamatrix » ou analogue).

Ces codes peuvent contenir tout type d'information tel que par exemple un numéro servant d'identifiant de la feuille de verre, le lieu, l'heure ou la date de fabrication, etc.

Il est connu de marquer de tels codes au moyen d'un rayonnement laser de tout type adapté, orienté de préférence perpendiculairement à la feuille de verre, i.e. au plan général de la feuille de verre. Ces codes sont en effet généralement destinés à être lus de face en positionnant un appareil face au symbole, et donc face à l'une des deux faces principales de la feuille de verre.

De tels symboles, généralement réalisés à proximité d'un bord latéral des feuilles de verre, peuvent être lus lorsque les dites feuilles sont empilées, grâce au procédé de la demanderesse décrit dans sa demande de brevet WO 2015/121549.

Ce procédé comprend l'acquisition, avec une caméra, d'au moins une image par la tranche des feuilles de verre, la direction d'observation étant non perpendiculaire et inclinée par rapport à la tranche de chacune des feuilles de verre dont le code doit être lu.

Le verre a un indice de réfraction supérieur à celui de l'air ce qui induit de la réfraction lumineuse. Cette réfraction lumineuse déforme le code qui peut être reconstruit par traitement d'image comme décrit dans la demande WO 2015/121549. Or il a été constaté que lorsque l'angle de la caméra est trop important ou trop faible par rapport à la normale au bord de la feuille par lequel le code est lu, les distorsions induites par la réfraction de la lumière sont trop fortes, rendant impossible la lecture des codes, notamment lorsque la qualité est moindre, par exemple lorsque les codes sont des codes gravés par laser CO₂ ou lorsque lors de la gravure, le laser s'est légèrement défocalisé du fait par exemple de vibrations de la feuille.

La demande de brevet WO 91/10968 A1 décrit un appareil pour la lecture de codes d'identification marquées sur des substrats semi-conducteurs.

La demande de brevet JP 2011 141724 A décrit un appareil de lecture de code 1D sur des substrats en verre utilisés dans les semi-conducteurs.

La présente invention a donc pour objectif de fournir un procédé d'acquisition d'images de codes marqués sur une pluralité de feuilles transparentes, par exemple des feuilles de verre, qui permet de délivrer des images de bonne qualité et qui soit par ailleurs facile à mettre en oeuvre.

Cet objectif est atteint avec un procédé d'acquisition d'images de codes marqués sur une pluralité de feuilles transparentes, par exemple des feuilles de verre, présentant chacune deux faces opposées et au moins un bord latéral principal et un bord latéral secondaire adjacents, chaque code étant marqué sur une face ou dans l'épaisseur d'une feuille, à proximité du bord latéral principal de ladite feuille, les feuilles étant disposées en regard les unes des autres avec leurs bords latéraux principaux orientés sensiblement dans une même direction, le procédé mettant en oeuvre une installation incluant un système d'imagerie optique positionné en regard des bords latéraux principaux des feuilles et mobile en translation dans une direction de déplacement, le système d'imagerie optique comprenant au moins une caméra et au moins un dispositif réfléchissant muni d'une surface réfléchissante, dans lequel la direction de visualisation de la caméra intersecte la surface réfléchissante, et la direction normale à la surface réfléchissante est non alignée et inclinée par rapport à la direction de visualisation de la caméra de sorte qu'une image d'au moins une partie d'un bord latéral principal d'une feuille puisse être réfléchie par ladite surface réfléchissante vers la caméra, le procédé comprenant le déplacement du système d'imagerie optique, selon la direction de déplacement, dans une pluralité de positions d'acquisition correspondant respectivement à une feuille de rang 1, ...n, ..., N, et, dans chaque position d'acquisition, une étape d'acquisition d'image du code de ladite feuille de rang 1, ... n, ..., N à travers le bord latéral principal de ladite feuille.

Dans la présente demande, on entend par bord latéral principal ou bord principal un bord latéral de la feuille à travers lequel le système d'imagerie optique acquiert une image de code.

On entend par bord latéral secondaire ou bord secondaire un bord latéral adjacent au bord latéral principal.

Généralement, le code étant marqué dans un coin de la feuille, le bord secondaire est le bord latéral adjacent au bord principal et le plus proche dudit code.

Un code dont on souhaite acquérir une image peut par exemple être un code en une dimension, notamment de type code barre, ou en deux dimensions, notamment de type Datamatrix, QR code ou analogue.

Selon un exemple, ce code peut avoir été marqué sur la feuille par laser mais cet exemple n'est pas limitatif, et le code pourra avoir été marqué selon toute autre méthode adaptée, notamment par une méthode d'impression de pigments.

Selon un exemple, chaque code est marqué sur une face ou dans l'épaisseur d'une feuille, à une distance du bord latéral principal de ladite feuille inférieure à 10mm, de préférence à 7mm, de préférence à 5mm, encore plus préférentiellement à 4mm. En d'autres termes, le point du code le plus éloigné du bord principal de la feuille est située à une distance de ce bord inférieure à 10mm, de préférence à 7mm, de préférence à 5mm, encore plus préférentiellement à 4mm

Les feuilles sont disposées en regard les unes des autres, autrement dit avec leurs faces en regard les unes des autres. Le procédé selon l'invention est particulièrement adapté pour l'acquisition d'images de codes sur des feuilles empilées. Par feuilles empilées, il est ici entendu que les feuilles sont disposées de telle sorte que leurs faces soient toutes disposées en regard les unes des autres, en contact ou non, de manière à former une pile. Cette pile peut par exemple être sensiblement verticale, dans ce cas les feuilles sont placées sensiblement horizontalement les unes sur les autres dans une direction sensiblement verticale, par exemple dans un rack, ou sensiblement horizontale, dans ce cas les feuilles sont placées sensiblement verticalement et placées les unes à côté des autres dans une direction sensiblement horizontale, par exemple sur un chevalet (dans ce cas, elle sont généralement inclinées d'un angle de l'ordre de 5° par rapport à la verticale, pour assurer leur stabilité).

Les feuilles transparentes peuvent être en verre, en plastique transparent, ou dans tout autre matériau présentant des propriétés de transparence adaptées.

Par exemple, chaque feuille peut être formée d'un substrat (notamment en verre) seul ou revêtu d'une ou plusieurs couches. Selon un exemple, le substrat peut avoir une transmission lumineuse d'au moins 50.

Enfin, la direction d'observation du système d'imagerie optique peut être, par exemple, l'axe optique du système d'imagerie lorsque les éléments du système d'imagerie optique sont à symétrie de révolution.

Le procédé selon l'invention met donc en oeuvre un système d'imagerie optique comprenant au moins une caméra et un dispositif réfléchissant, et destiné à se déplacer par rapport aux feuilles de façon à acquérir successivement à travers le bord principal de chaque feuille, une image du code de ladite feuille devant être lu. Par « image du code devant être lu », il est entendu ici une image contenant au moins une image d'une partie du bord principal, ainsi qu'au moins une image d'une partie du volume situé dans la feuille et/ou d'une partie d'une des faces de la feuille portant le code, une partie au moins de la lumière provenant de ou diffusée par ledit volume ou ladite face portant le code et ayant servi à former l'image étant passée au moins une fois à travers le bord principal avant d'être captée par la caméra.

Il est fait remarquer que cette image du code devant être lu peut, lors de l'acquisition, soit être obtenue instantanément à l'aide d'une caméra matricielle, soit résulter de la compilation d'une pluralité d'images de tranches du code, obtenues successivement par une caméra linéaire.

Dans la présente invention, la caméra n'acquiert pas une image directe du code à travers le bord principal de la feuille comme dans le procédé connu de la demande WO 2015/121549, mais observe l'image dudit code à travers le bord principal, réfléchie par le dispositif réfléchissant.

La direction normale à la surface réfléchissante est non-alignée et forme un angle avec la direction de visualisation de la caméra. Selon la position de la caméra par rapport aux feuilles, la direction normale à la surface réfléchissante peut ou non former un angle avec la direction normale au bord principal de la feuille dont le code doit être lu. Idéalement, la direction normale à la surface réfléchissante forme un angle avec ladite direction normale au bord principal.

La caméra et le dispositif réfléchissant sont déplacés simultanément dans la direction de déplacement, soit par incréments, soit de façon continue, de façon à prendre, pour chaque feuille, au moins une position dite utile permettant l'acquisition de l'image souhaitée.

Pour cela, la caméra et le dispositif réfléchissant peuvent par exemple être liés fixement à un support unique se déplaçant dans la direction de déplacement, par exemple le long d'un rail. Selon un autre exemple, la caméra et le dispositif réfléchissant sont portés par des supports distincts mobiles dans la direction de déplacement. En effet, la caméra et le dispositif réfléchissant ne restent pas nécessairement fixes l'un par rapport à l'autre au cours du déplacement. Il peut parfois être souhaitable de les déplacer relativement l'un par rapport à l'autre pour régler la netteté de l'image acquise.

Selon un exemple, l'installation comprend en outre au moins une source lumineuse éclairant la feuille de rang n au cours de l'étape d'acquisition d'image du code de ladite feuille de rang n.

Selon une disposition particulière, la source lumineuse éclaire au moins le bord latéral secondaire de la feuille de rang n au cours de l'étape d'acquisition d'image du code de ladite feuille de rang n.

On comprend que dans ce cas la source lumineuse n'est pas dirigée vers le bord latéral de la feuille à travers lequel l'image du code est acquise par le dispositif d'imagerie optique, à savoir le bord latéral principal, mais vers le bord latéral adjacent le plus proche du code devant être lu, à savoir le bord latéral secondaire. La source lumineuse peut plus particulièrement être dirigée vers une portion dudit bord latéral secondaire située en regard du code, par exemple dans une direction sensiblement alignée avec la direction normale au bord latéral secondaire. Dans un autre mode de réalisation de l'invention, il est possible d'induire un angle entre la direction d'illumination et la direction normale au bord secondaire afin de maximiser l'intensité lumineuse reçue par le code devant être lu, par exemple en raison de la réfraction de la lumière par le bord latéral secondaire et/ou d'éventuels défauts de planéité dudit bord secondaire et/ou du diagramme de rayonnement de ladite source lumineuse et/ou d'un décalage entre la source lumineuse et la feuille à éclairer.

A titre non limitatif, la source lumineuse peut être une source de lumière blanche. Il peut par exemple s'agir d'un dispositif à LED.

De façon avantageuse, cette source lumineuse est solidaire en translation du système d'imagerie optique, autrement dit de la caméra et/ou du dispositif réfléchissant, de façon à pouvoir, à chaque instant, concentrer le flux lumineux à proximité de la feuille dont on souhaite lire le code.

Si la caméra et/ou le dispositif réfléchissant sont portés par un support mobile le long d'un rail, comme suggéré précédemment, alors ladite source lumineuse est avantageusement portée par le même support.

Cette disposition n'est cependant pas limitative, et la position de la source lumineuse pourra, de façon alternative, être ajustée indépendamment du reste de l'installation de façon à augmenter le contraste de l'image acquise selon le mode de réalisation décrit plus haut.

Pour augmenter la quantité de lumière injectée à l'intérieur de chaque feuille, la lumière émise par la source lumineuse est de préférence focalisée en direction du bord latéral secondaire de chaque feuille au moyen d'une lentille de telle sorte que le point focal se trouve au voisinage du bord latéral secondaire.

Encore plus préférentiellement, la source lumineuse est configurée pour n'éclairer qu'une feuille à la fois (la feuille de rang n dont on souhaite lire le code).

A noter que l'on pourrait également envisager d'autres modes de réalisation dans lesquels la source lumineuse serait dirigée vers le bord latéral principal de la feuille, de façon à éclairer le code à travers ce bord principal.

Selon un exemple, la caméra est munie d'un objectif à distance focale réglable et/ou d'ouverture réglable.

Selon un exemple, la distance focale de l'objectif est réglée automatiquement, notamment avant l'ensemble des étapes d'acquisition ou avant chaque étape d'acquisition d'image.

Selon un exemple, l'ouverture de l'objectif est réglée automatiquement, notamment avant l'ensemble des étapes d'acquisition ou avant chaque étape d'acquisition d'image.

Selon un exemple, le dispositif réfléchissant est monté mobile en rotation autour d'un axe, et le procédé comprend au moins une étape d'ajustement de l'inclinaison de la surface réfléchissante par rapport à l'axe optique de la caméra, notamment avant l'ensemble des étapes d'acquisition ou avant chaque étape d'acquisition d'image.

Selon un exemple, les feuilles sont stockées en position sensiblement verticale sur un dispositif de support, notamment un chevalet, présentant une surface de repos sensiblement horizontale définissant un plan de repos.

Selon un mode de réalisation, les feuilles sont stockées en position sensiblement verticale sur le dispositif de support présentant une surface de repos sensiblement horizontale définissant un plan de repos, les feuilles étant en appui sur ladite surface de repos avec leurs bords latéraux principaux orientés vers ladite surface. A noter que les feuilles peuvent avoir leurs bords latéraux principaux en appui plan sur la surface de repos ou peuvent être inclinées légèrement par rapport à ladite surface de sorte à n'être qu'en appui linéaire sur ladite surface, sur l'une de leurs arêtes.

Par sensiblement verticale, on entend ici que les feuilles de verre forment un angle nul, ou inférieur ou égal à 15° avec la verticale.

De manière analogue, la surface de repos sera considérée comme sensiblement horizontale si le plan de repos qu'elle définit forme avec l'horizontale un angle nul, ou inférieur ou égal à 15 degrés.

Les bords principaux des feuilles, à travers lesquels les codes devront être lus, se retrouvent ainsi sensiblement dans un même plan. Le décalage pouvant exister entre lesdits bords principaux est limité à celui pouvant découler de l'éventuelle inclinaison des feuilles. On évite ainsi que le bord principal d'une feuille se retrouve caché par une feuille adjacente et ne puisse être imagé correctement par le système d'imagerie optique, que la distance camera/code varie de manière trop importante, ce qui demanderait des ajustements de distance focale pour chaque image, et/ou que plusieurs codes se retrouvent alignés sur le chemin optique du dispositif d'imagerie.

Comme variante, les feuilles peuvent être stockées en position sensiblement verticale sur un dispositif de support, notamment un chevalet, présentant une surface de repos sensiblement horizontale définissant un plan de repos, les feuilles étant en appui sur ladite surface de repos avec leurs bords latéraux secondaires orientés vers ladite surface.

Selon un exemple, le procédé comprend en outre le traitement de chaque image acquise par un calculateur programmé pour extraire l'information présente dans au moins un code visible sur l'image.

Le présent exposé concerne également une installation pour l'acquisition d'images d'une pluralité de codes marqués sur une pluralité de feuilles transparentes, notamment des feuilles de verre, présentant chacune deux faces opposées et au moins un bord latéral principal et un bord latéral secondaire adjacents, chaque code étant marqué sur une face ou dans l'épaisseur d'une feuille, à proximité du bord latéral principal de ladite feuille, les feuilles étant disposées en regard les unes des autres avec leurs bords latéraux principaux orientés sensiblement dans une même direction, l'installation étant notamment adaptée pour la mise en oeuvre du procédé décrit précédemment, et l'installation incluant un système d'imagerie optique mobile en translation dans une direction de déplacement, le système d'imagerie optique comprenant au moins une caméra et au moins un dispositif réfléchissant muni d'une surface réfléchissante, dans lequel la direction de visualisation de la caméra intersecte la surface réfléchissante, et la direction normale à la surface réfléchissante est non alignée et inclinée par rapport à la direction de visualisation de la caméra, le système d'imagerie optique étant adapté pour se déplacer, selon la direction de déplacement, dans une pluralité de positions d'acquisition correspondant respectivement à une feuille de verre de rang 1, ... n, ..., N, et, dans chaque position d'acquisition, à acquérir une image du code de ladite feuille de verre de rang 1, ...n, ..., N à travers le bord latéral principal de ladite feuille.

Selon un exemple, l'installation comprend en outre un calculateur adapté pour traiter chaque image acquise et programmé pour extraire l'information présente dans au moins un code visible sur l'image.

Selon un exemple, le système d'imagerie est monté mobile en translation le long d'un rail.

Selon un exemple, l'installation comprend en outre une source lumineuse éclairant au moins une feuille dont le code doit être lu.

Selon une disposition avantageuse, la source lumineuse est orientée de façon à éclairer au moins un code devant être lu.

Selon un exemple particulier, la source lumineuse peut être configurée de façon à éclairer dans une direction sensiblement orthogonale à la direction de déplacement (i.e. formant un angle nul ou inférieur ou égal à 30° avec un plan orthogonal à ladite direction).

Selon un exemple, la source lumineuse est solidaire en translation du système d'imagerie optique.

Selon un exemple, la source lumineuse comprend une lentille de focalisation de sa lumière émise.

Selon un exemple, l'installation comprend en outre un dispositif de support, notamment un chevalet, pour le stockage des feuilles en position sensiblement verticale, le dispositif de support comportant une surface de repos sensiblement horizontale définissant un plan de repos.

Selon un exemple, le système d'imagerie optique est placé sous le plan de repos.

Selon un autre exemple, la source lumineuse est placée sous le plan de repos.

Selon un exemple, l'installation comprend en outre une pluralité de feuilles présentant chacune deux faces opposées et au moins un bord latéral principal et un bord latéral secondaire adjacents, chaque code étant marqué sur une face ou dans l'épaisseur d'une feuille, à proximité du bord latéral principal de ladite feuille, les feuilles étant disposées en regard les unes des autres avec leurs bords principaux orientés sensiblement dans une même direction.

Les feuilles peuvent être en contact les unes avec les autres (avec leurs faces) (éventuellement par l'intermédiaire d'une poudre réduisant l'adhésion des feuilles entre elles sous l'effet de forces de type Van der Waals, ladite poudre pouvant être par exemple de la Lucite) ou espacées les unes des autres, notamment au moyen d'entretoises.

Plusieurs exemples de réalisation sont décrits dans le présent exposé. Toutefois, sauf précision contraire, les caractéristiques décrites en relation avec un exemple de réalisation quelconque peuvent être appliquées à un autre mode ou exemple de réalisation.

L'invention sera bien comprise et ses avantages apparaîtront mieux, à la lecture de la description détaillée qui suit, de plusieurs exemples de réalisation représentés à titre non limitatifs. La description se réfère aux dessins annexés.
[Fig. 1] est une vue de face d'une feuille de verre marquée de deux codes.
[Fig. 2] montre un ensemble de cinq feuilles de verre marquées par des codes devant être lus, stockées sur un chevalet.
[Fig. 3] montre une installation selon un premier mode de réalisation de l'invention, positionnée à côté du chevalet de la figure 2 pour la lecture des codes des feuilles de verre.
[Fig. 4] est une vue en coupe selon IV de la figure 3, le système d'imagerie optique se trouvant dans une première position.
[Fig. 5] est une vue en coupe selon IV de la figure 3, le système d'imagerie optique se trouvant dans une seconde position.
[Fig. 6] illustre le pivotement du dispositif réfléchissant, permettant la lecture d'un code indifféremment sur l'une ou l'autre face de la feuille de verre.
[Fig. 7] est une vue en perspective de l'installation de la figure 3.
[Fig. 8] est une vue de détail de la source lumineuse de la figure 6.
[Fig. 9] illustre une installation selon un deuxième mode de réalisation de l'invention.
[Fig. 10] montre un schéma optique en coupe transversale expliquant la visualisation d'un code par un bord latéral principal d'une feuille de verre.

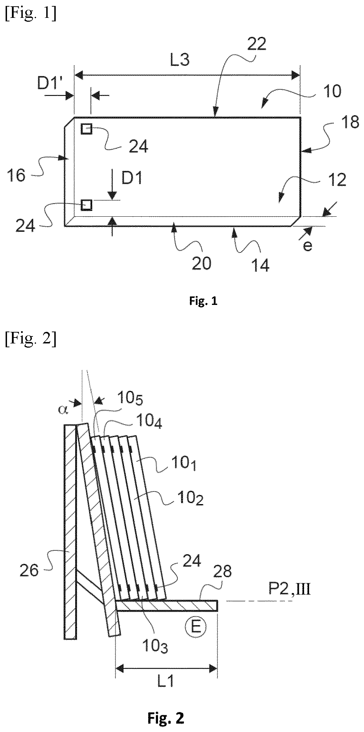

Une feuille de verre rectangulaire 10 telle qu'illustrée sur la figure 1 présente deux faces opposées 12, 14 et quatre bords latéraux 16, 18, 20, 22, opposés deux à deux. On dira que deux bords latéraux sont adjacents lorsqu'ils ont une arête de la feuille de verre en commun.

Pour la suite, on définit deux bords courts (un premier bord court 16 et un deuxième bord court 18) et deux bords longs (un premier bord long 20 et un deuxième bord long 22) de la feuille de verre. Cet exemple n'est toutefois pas limitatif, et les bords courts 16, 18 et longs 20, 22 pourraient évidemment être intervertis dans la suite de la présente description (autrement dit, les feuilles de verre pourraient être stockées en appui sur leurs bords courts 16, 18 plutôt que leurs bords longs 20, 22 comme décrit dans la suite), ou encore les feuilles de verre 10 pourraient être carrées ou présenter toute autre forme adaptée.

La feuille de verre 10 a par exemple une épaisseur comprise entre 0,5 et 19 mm, notamment entre 2 et 12 mm, par exemple entre 4 et 8 mm. En variante cependant, la feuille de verre 10 a une épaisseur de tout type adapté. Il s'agit par exemple de verre silico-sodo-calcique mais il s'agit en variante d'un verre de tout type adapté ou de tout autre matériau transparent adapté.

Il est connu d'identifier une telle feuille de verre en la marquant avec au moins un code 24, sur l'une de ses faces 12, 14, ou dans son épaisseur.

Le code peut être un code en une dimension, de type code barre, ou en deux dimensions de tout type adapté, notamment de l'un des types suivants : 3-DI code, Aztex Code, Codablock, Code 1, Code 16K, Dot Code, QR Code, ezCode, BeeTagg Big, BeeTagg Landscape, Data Matrix, Maxicode, Snpwflake, Verocode, BeeTagg Hexagon, BeeTagg None, ShotCode, MiniCode, Code 49, Datastrip Code, CP Code, ISS SuperCode.

Pour réaliser le marquage d'un tel code 24, on utilise par exemple un laser de marquage CO2. A titre d'exemple, le laser est adapté pour altérer la surface, la couleur, ou encore l'indice de réfraction de la feuille de verre et ainsi marquer le code de façon lisible.

Dans l'exemple, le même code 24 a été marqué de façon symétrique à proximité de chaque bord long 20, 22 de la feuille.

Chaque code 24 est typiquement situé à une distance D1 du bord long 20, 22 le plus proche inférieure à 10mm, de préférence à au plus 7mm, de préférence à au plus 5mm, encore plus préférentiellement à au plus 4mm.

Généralement, le code est marqué dans un coin de la feuille, sensiblement à égale distance de deux bords orthogonaux adjacents.

Dans l'exemple, chaque code est donc également situé à une distance D1' du bord court 16 inférieure à 10mm, de préférence à au plus 7mm, de préférence à au plus 5mm, encore plus préférentiellement à au plus 4mm.

La figure 2 illustre une pluralité de feuilles de verre 10₁ à 10₅ (ci-après 10) similaires à celle décrite en lien avec la figure 1, disposées en regard les unes des autres sur un dispositif de support 26, ici un chevalet présentant une surface de repos 28 sensiblement horizontale définissant un plan P2.

Les feuilles de verre 10 sont ici parallèles et en contact les unes avec les autres, et reposent avec leurs premiers bords longs 20 sur la surface de repos 28.

Dans la suite on appellera bords d'appui les bords 20 des feuilles de verre 10 situés en regard de la surface de repos 28 du support 20.

On appellera par ailleurs bords verticaux les bords latéraux 16 des feuilles de verre directement adjacents aux bords d'appui 20 et les plus proches des codes 24 devant être lus.

Les feuilles de verre 10 sont généralement positionnées sensiblement à la verticale, c'est-à-dire de façon telle que leurs faces 12, 14 forment un angle α compris entre 0 et 15° avec un plan vertical, préférentiellement entre 0 et 6°.

Dans l'exemple de la figure 2, elles se trouvent légèrement inclinées par rapport à la verticale, de sorte que leurs bords d'appui 20 ne sont pas en appui plan contre la surface de repos 28, mais en appui linéaire, le long d'une arête. Ils sont cependant orientés dans une même direction et très peu décalés les uns par rapport aux autres.

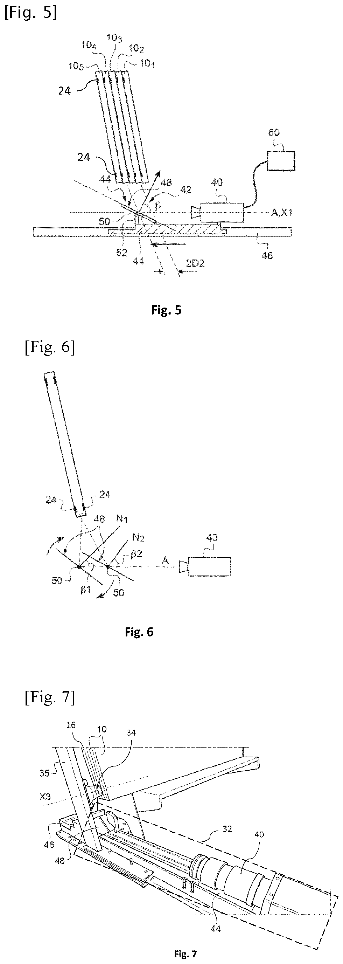

Il est par ailleurs préférable que les bords verticaux 16 soient dans un même plan, i.e. alignés les uns avec les autres, comme illustré sur la figure 7.

La surface de repos 28 est typiquement rectangulaire, de dimension L1 dans la direction d'empilement des feuilles de verre et de dimension L2 mesurée dans une direction orthogonale.

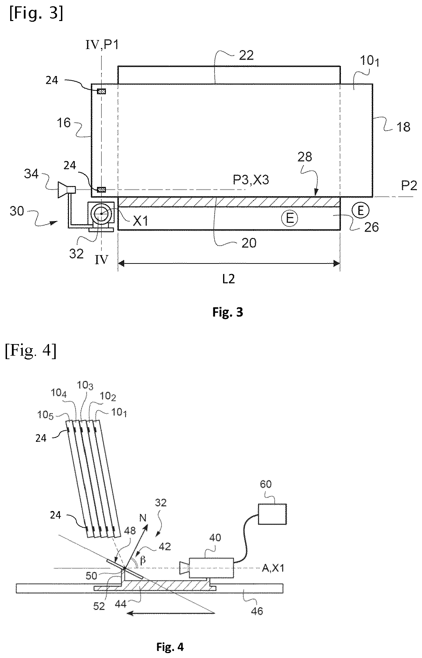

La figure 3 montre le chevalet 26 selon la direction III de la figure 2.

On y observe que les parties respectives des feuilles de verre 10 portant les codes 24 se trouvent en porte-à-faux par rapport à la surface de repos 28, la dimension L2 de ladite surface étant inférieure à la longueur L3 des bords d'appui des feuilles de verre 10.

La figure 3 illustre en outre une installation 30 selon l'invention, destinée à l'acquisition d'images des dits codes 24.

L'installation 30 comporte un système d'imagerie optique 32 et une source lumineuse 34, qui seront décrits plus en détail en référence aux figures 4 à 7.

On observe que le système d'imagerie optique 32 est ici placé en regard des bords d'appui 20 des feuilles de verre 10, en-dessous du plan de repos P2.

Ces bords d'appui 20 forment donc ici les bords latéraux principaux des feuilles de verre 10, à travers lesquels seront lus les codes 24 des dites feuilles.

Les bords verticaux 16 directement adjacents forment les bords latéraux secondaires des feuilles de verre 10.

Comme il sera défini dans la suite, le système d'imagerie optique 32 est configuré pour se déplacer en translation selon une direction X1 dite de déplacement. Avantageusement, cette direction de déplacement X1 est contenue dans un plan P1 dit plan de déplacement orthogonal au plan de repos P2 et sensiblement aligné avec l'ensemble des codes 24 devant être lus. La direction de déplacement X1 est ainsi sensiblement alignée avec l'ensemble des code 24 devant être lu, de sorte qu'en se déplaçant en ligne droite selon cette direction, le système d'imagerie optique suit la direction d'empilement des feuilles de verres 10 et peut visualiser au moins une image de chaque code.

Dans l'exemple illustré, cette direction de déplacement X1 est parallèle au plan de repos P2, et donc horizontale. Elle est par ailleurs parallèle aux bords verticaux 16 des feuilles de verre 10.

Le système d'imagerie optique 32 est illustré plus en détail sur la figure 4.

Il comprend une caméra (éventuellement munie d'un objectif) 40 et un dispositif réfléchissant 42. Dans l'exemple, les deux éléments 40, 42 sont fixement liés à un même chariot 44 monté mobile en translation le long d'un rail 46 s'étendant dans la direction de déplacement X1. Comme variante, ils pourraient aussi être montés sur deux chariots distincts, de façon à permettre un réglage de la distance les séparant.

La caméra 40 est par exemple une caméra à capteur matriciel CCD, mais pourrait aussi être une caméra à capteur linéaire ou une caméra à capteur CMOS.

Le dispositif réfléchissant 42 comprend une surface réfléchissante plane 48 formée ici par un miroir, solidaire d'un axe rotatif 50 contenu dans un plan parallèle au plan de repos, de préférence aussi orthogonal à la direction de déplacement X1, lui-même porté par un pied 52.

Dans l'exemple illustré, la direction de visualisation de la caméra, qui correspond ici à son axe optique A, est parallèle à la direction de déplacement X1 et intersecte la surface réfléchissante 48.

La normale N à la surface réfléchissante 48 est non alignée et inclinée d'un angle β par rapport à l'axe optique A de la caméra 32.

Selon l'invention, l'inclinaison β de la normale à la surface réfléchissante 48 par rapport à la direction de visualisation A de la caméra de même que la position de la surface réfléchissante (position d'acquisition), doivent être choisies de sorte qu'une image du code à travers le bord latéral principal 20 d'une feuille de verre 10 puisse être réfléchie vers la caméra 40 par la surface réfléchissante 48.

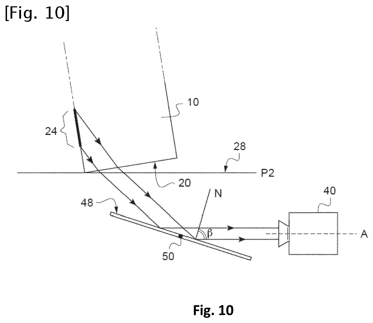

La figure 10 montre un schéma optique en coupe transversale expliquant la visualisation d'un code par le bord latéral principal: du fait de la réfraction lumineuse, la lumière servant à obtenir une image à travers le bord principal du code devant être lu est déviée lorsqu'elle traverse le bord principal, avant d'être réfléchie par la surface réfléchissante puis captée par la caméra. Il faut tenir compte de cette déviation pour choisir l'inclinaison β, de même que la position de la surface réfléchissante.

De façon à acquérir une image de chaque code 24 de chaque feuille de verre 10, le chariot 44 portant le système d'imagerie optique 32 est adapté pour se déplacer, selon la direction de déplacement X1, dans une pluralité de positions dites positions d'acquisition, correspondant respectivement à une feuille de verre de rang 1, ...n, ..., N, avec, dans l'exemple N=5. Dans chacune de ces positions d'acquisition, le système d'imagerie acquiert une image contenant au moins une image du code à travers le premier bord latéral de la feuille de verre de rang 1, ...n, ..., 5 correspondant à ladite position. L'image est ensuite transmise à un calculateur 60 adapté pour la traiter et programmé pour extraire l'information présente dans le code 24 visible sur l'image.

La figure 4 illustre ainsi la position d'acquisition d'image du code 24 de la feuille de rang 2, quand la figure 5 illustre la position d'acquisition d'image du code 24 de la feuille de rang 4. Entre ses deux positions, le système d'imagerie 32 s'est déplacé d'une distance D2, s'est arrêté pour acquérir l'image du code de la feuille de rang 3, puis s'est une nouvelle fois déplacé de la même distance D2.

Le déplacement du chariot 44 est de préférence réalisé par incrément. Autrement dit, le chariot 44 alterne des phases de déplacement puis des phases d'arrêt durant lesquelles sont réalisées les acquisitions d'image. Selon un autre mode de réalisation, le déplacement peut être continu et des images peuvent être acquises ponctuellement par la caméra, généralement à intervalle régulier, ledit intervalle étant défini selon la vitesse de déplacement du système d'imagerie optique. Selon encore un autre mode de réalisation, le déplacement peut être continu et une vidéo peut être acquise continuellement pendant le déplacement, les images des codes étant ensuite extraites de la vidéo par le système de traitement d'images.

Dans l'exemple, les feuilles de verre 10 présentant la plupart du temps la même épaisseur e, la distance D2, mesurée dans la direction de déplacement X1, entre deux positions d'acquisition adjacentes est généralement proche de la distance mesurée entre les deux faces principales 12, 14 d'une feuille de verre 10, dans cette même direction X1.

Le réglage du système 32 est, de préférence, réalisé avant l'ensemble des étapes d'acquisition. Il peut aussi, en tout ou partie, être réalisé avant chaque étape d'acquisition.

Par exemple, si la caméra 40 est munie d'un objectif à distance focale réglable et/ou d'ouverture réglable, le réglage du système 32 peut comprendre un réglage de la distance focale de l'objectif et/ou l'ouverture de l'objectif.

Lorsque la caméra 40 et le dispositif réfléchissant 42 peuvent être déplacés relativement l'un par rapport à l'autre, le réglage du système 32 peut aussi comprendre un déplacement relatif des deux éléments 40, 42 dans la direction de déplacement X1.

Enfin, le réglage du système peut aussi comprendre une étape d'ajustement de l'inclinaison de la surface réfléchissante 48 par rapport à l'axe optique A de la caméra 32.

La figure 6 illustre l'ajustement de l'angle d'inclinaison β de la surface réfléchissante 48 selon que le code 24 est marqué sur l'une ou l'autre face 12, 14 de la feuille de verre 10.

Comme indiqué précédemment et comme illustré sur les figures 3, 7 et 8, l'installation d'acquisition 30 selon ce premier mode de réalisation comprend en outre une source lumineuse 34, destinée à éclairer les feuilles de verre 10 de façon à améliorer le contraste de l'image acquise par le système d'imagerie optique 32.

La source lumineuse 34 est orientée par rapport à l'empilement de sorte que la lumière qu'elle génère pénètre à l'intérieur des feuilles de verre 10 à travers les bords latéraux secondaires (ici les bords verticaux) 16 des dites feuilles 10.

De façon avantageuse, le système d'imagerie optique 32 et la source de lumière 34 sont coordonnés dans leur déplacement pour assurer un bon éclairage du code 24 au moment de chaque acquisition d'image.

De préférence, comme illustré sur la figure 7, la source lumineuse 34 est solidaire en translation d'un montant vertical 35, lui-même solidaire du chariot 44.

Comme illustré, le montant vertical 35, ainsi que la source lumineuse 34 qu'il porte, se déplacent le long et en regard des bords latéraux secondaires 16.

La source lumineuse 34 est par ailleurs agencée par rapport au système d'imagerie 32 de sorte que lorsque la caméra 40 acquiert une image du code 24 de la feuille de rang n, la source lumineuse 34 éclaire, de façon prioritaire, le bord secondaire 16 de ladite feuille de rang n.

La source lumineuse 34 se déplace avantageusement dans un plan dit plan d'éclairage P3, orthogonal au plan de déplacement P1 et sensiblement parallèle à la direction d'empilement.

Sa direction principale d'éclairement X3 est ici orthogonale aux bords secondaires 16 qu'elle éclaire. Dans un autre mode de réalisation, la direction d'éclairement X3 peut ne pas être orthogonale aux bords secondaires mais inclinée par rapport à ceux-ci, par exemple pour éclairer directement le code dans un souci de maximisation de la luminosité du code devant être lu.

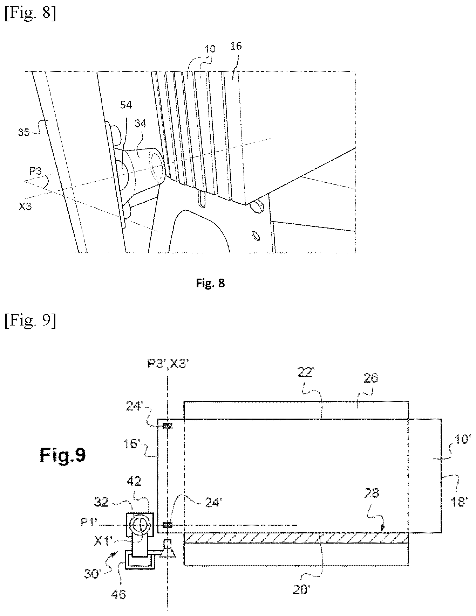

Selon une autre disposition avantageuse visible sur la figure 8 et indépendante des dispositions précédentes, la lumière émise par la source lumineuse 34 est par ailleurs focalisée sur le bord secondaire 16 de chaque feuille de verre au moyen d'une lentille de focalisation 54, de telle sorte à maximiser le flux lumineux effectivement injecté dans la feuille de verre par le bord secondaire.

La figure 9 illustre une installation 30' selon un deuxième mode de réalisation de l'invention. A noter que les feuilles de verre et les éléments y afférents décrits en lien avec ce deuxième mode de réalisation et similaires aux éléments décrits précédemment ont les mêmes références, additionnées d'un prime.

Une telle installation 30' est particulièrement avantageuse lorsque l'espace E sous les bords d'appui 20' des feuilles de verre 10' est restreint. Dans ce cas, en effet, il est plus simple de faire se déplacer dans cet espace restreint E la source lumineuse 34, qui est moins encombrante que le système d'imagerie optique 32.

L'installation 30' selon ce deuxième mode de réalisation est particulièrement adaptée lorsque la hauteur libre sous la surface de repos 28 est inférieure à 8 cm ou lorsqu'un obstacle empêche de parcourir toute l'épaisseur de la pile par en-dessous.

Comme indiqué précédemment, chaque code 24' des feuilles de verre 10' du type décrit précédemment et stockées sur le chevalet 26 est également à une distance du bord vertical 16' directement adjacent inférieure à 10mm, de préférence à au plus 7mm, de préférence à au plus 5mm, encore plus préférentiellement à au plus 4mm.

De cette façon, il est possible d'acquérir les images des codes 24' non plus à travers les bords d'appui 20' des feuilles 10', mais à travers les bords verticaux 16'.

Dans ce mode de mise en oeuvre, les bords principaux des feuilles de verre à travers lesquels les codes 24' doivent être lus sont donc les bords verticaux 16' des feuilles de verre 10'. Les bords secondaires des feuilles de verre sont formés par les bords d'appui 20'.

Le système d'imagerie optique 32, qui comprend la caméra 40 et le dispositif réfléchissant 42, se déplace dans un plan de déplacement P1' qui, comme dans le mode de réalisation précédent, intersecte à la fois l'ensemble des bords latéraux principaux 16' et l'ensemble des codes 24' devant être lus. Dans l'exemple, la direction de déplacement X1', confondue avec ce plan P1' est, plus précisément, parallèle au plan de repos P2 et aux bords principaux 16'.

La source lumineuse 34 est placée sous le plan de repos P2 et éclaire les bords d'appui 20'. Comme dans le mode de réalisation précédent, elle se déplace avantageusement dans un plan d'éclairage P3' sensiblement parallèle à la direction de déplacement X1' et intersectant l'ensemble des codes 24' devant être lus. Par ailleurs, sa direction principale d'éclairement X3' est de préférence orthogonale aux bords secondaires 20' qu'elle éclaire, mais peut également être inclinée par rapport à ceux-ci de façon à maximiser la luminosité des codes devant être lus.

## Revendications

1. Procédé d'acquisition d'images de codes (24) marqués sur une pluralité de feuilles transparentes (10₁, ...10_{N}, 10'), par exemple des feuilles de verre, présentant chacune deux faces opposées (12, 14) et au moins un bord latéral principal (20, 16') et un bord latéral secondaire adjacents (16, 20'), chaque code (24, 24') étant marqué sur une face (12, 14) ou dans l'épaisseur d'une feuille (10, 10'), à proximité du bord latéral principal (20, 16') de ladite feuille (10, 10'), les feuilles (10, 10') étant disposées en regard les unes des autres avec leurs bords latéraux principaux (20, 16') orientés sensiblement dans une même direction, le procédé mettant en oeuvre une installation (30, 30') incluant un système d'imagerie optique (32) positionné en regard des bords latéraux principaux (20, 16') des feuilles (10, 10') et mobile en translation dans une direction de déplacement (X1, X1'), le système d'imagerie optique (32) comprenant au moins une caméra (40) et au moins un dispositif réfléchissant (42) muni d'une surface réfléchissante (48), dans lequel la direction de visualisation (A) de la caméra (40) intersecte la surface réfléchissante (48), et la normale à la surface réfléchissante (48) est non alignée et inclinée par rapport à la direction de visualisation (A) de la caméra (40) de sorte qu'une image d'au moins une partie d'un bord latéral principal (20, 16') d'une feuille (10, 10') puisse être réfléchie par ladite surface réfléchissante (48) vers la caméra (40), le procédé comprenant le déplacement du système d'imagerie optique (32), selon la direction de déplacement (X1, X1'), dans une pluralité de positions correspondant respectivement à une feuille (10, 10') de rang 1, ... n, ..., N, et, dans chaque position, une étape d'acquisition d'image du code (24, 24') de ladite feuille (10, 10') de rang 1, ...n, ..., N à travers le bord latéral principal (20, 16') de ladite feuille (10, 10').

2. Procédé selon la revendication 1, dans lequel chaque code (24, 24') est marqué sur une face (12, 14) ou dans l'épaisseur d'une feuille, à une distance (D1) du bord latéral principal (20, 16') de ladite feuille (10, 10') inférieure à 10mm, de préférence à au plus 7mm, de préférence à au plus 5mm, encore plus préférentiellement à au plus 4mm.

3. Procédé selon la revendication 1 ou 2, dans lequel l'installation (30, 30') comprend en outre au moins une source lumineuse (34), et ladite au moins une source lumineuse (34) éclaire au moins le bord latéral secondaire (16, 20') de la feuille (10, 10') de rang n au cours de l'étape d'acquisition d'image du code (24) de ladite feuille de rang n.

4. Procédé selon la revendication 3, dans lequel la source lumineuse (34) est solidaire en translation du système d'imagerie optique (32).

5. Procédé selon la revendication 3 ou 4, dans lequel la lumière émise par la source lumineuse (34) est focalisée sur le bord latéral secondaire (16, 20') de chaque feuille de verre (10, 10') au moyen d'une lentille de focalisation (54).

6. Procédé selon l'une quelconque des revendications 1 à 5, dans lequel la caméra (32) est munie d'un objectif à distance focale réglable et/ou d'ouverture réglable.

7. Procédé selon la revendication 6, dans lequel la distance focale de l'objectif est réglée automatiquement, notamment avant l'ensemble des étapes d'acquisition ou avant chaque étape d'acquisition d'image.

8. Procédé selon la revendication 6 ou 7, dans lequel l'ouverture de l'objectif est réglée automatiquement, notamment avant l'ensemble des étapes d'acquisition ou avant chaque étape d'acquisition d'image.

9. Procédé selon l'une quelconque des revendications 1 à 8, dans lequel le dispositif réfléchissant (42) est monté mobile en rotation autour d'un axe (50), et le procédé comprend au moins une étape d'ajustement de l'inclinaison (β) de la surface réfléchissante (48) par rapport à l'axe optique (A) de la caméra (40), notamment avant l'ensemble des étapes d'acquisition ou avant chaque étape d'acquisition d'image.

10. Procédé selon l'une quelconque des revendications 1 à 9, dans lequel les feuilles (10) sont stockées en position sensiblement verticale sur un dispositif de support (26), notamment un chevalet, présentant une surface de repos (28) sensiblement horizontale, les feuilles étant en appui sur ladite surface de repos (28) avec leurs bords latéraux principaux (20) orientés vers ladite surface (28).

11. Procédé selon l'une quelconque des revendications 1 à 9, dans lequel les feuilles (10') sont stockées en position sensiblement verticale sur un dispositif de support (26), notamment un chevalet, présentant une surface de repos (28) sensiblement horizontale, les feuilles (10') étant en appui sur ladite surface de repos (28) avec leurs bords latéraux secondaires (20') orientés vers ladite surface (28).

12. Procédé selon l'une quelconque des revendications 1 à 11, comprenant en outre le traitement de chaque image acquise par un calculateur programmé pour extraire l'information présente dans au moins un code visible sur l'image.

13. Installation (30, 30') pour l'acquisition d'images d'une pluralité de codes (24) marqués sur une pluralité de feuilles transparentes (10₁, ...10_{N}, 10'), notamment des feuilles de verre, présentant chacune deux faces opposées (12, 14) et au moins un bord latéral principal (20, 16') et un bord latéral secondaire (16, 20') adjacents, chaque code (24, 24') étant marqué sur une face (12, 14) ou dans l'épaisseur d'une feuille (10, 10'), à proximité du bord latéral principal (20, 16') de ladite feuille (10, 10'), les feuilles (10, 10') étant disposées en regard les unes des autres avec leurs bords latéraux principaux (20, 16') orientés sensiblement dans une même direction, l'installation (30, 30') étant notamment adaptée pour la mise en oeuvre d'un procédé selon l'une quelconque des revendications 1 à 12, et l'installation étant **caractérisée en ce qu'**elle inclut un système d'imagerie optique (32) mobile en translation dans une direction de déplacement (X1, X1'), le système d'imagerie optique (32) comprenant au moins une caméra (40) et au moins un dispositif réfléchissant (42) muni d'une surface réfléchissante (48), dans lequel la direction de visualisation (A) de la caméra (40) intersecte la surface réfléchissante (48), et la normale à la surface réfléchissante (48) est non alignée et inclinée par rapport à la direction de visualisation (A) de la caméra (32), le système d'imagerie optique (32) étant adapté pour se déplacer, selon la direction de déplacement (X1, X1'), dans une pluralité de positions d'acquisition correspondant respectivement à une feuille de rang 1, ...n, ..., N, et, dans chaque position d'acquisition, à acquérir une image du code (24, 24') de ladite feuille de rang 1, ...n, ..., N à travers le bord latéral principal (20, 16') de ladite feuille (10, 10').

14. Installation (30, 30') selon la revendication 13, comprenant en outre un calculateur (60) adapté pour traiter chaque image acquise et programmé pour extraire l'information présente dans au moins un code (24, 24') visible sur l'image.

15. Installation (30, 30') selon la revendication 13 ou 14, dans laquelle le système d'imagerie optique (32) est monté mobile en translation le long d'un rail (46).

16. Installation (30, 30') selon l'une quelconque des revendications 13 à 15, comprenant en outre une source lumineuse (34) éclairant dans une direction sensiblement orthogonale à la direction de déplacement (X1, X1').

17. Installation (30, 30') selon la revendication 16, dans laquelle la source lumineuse (34) est solidaire en translation du système d'imagerie optique (32).

18. Installation (30, 30') selon la revendication 16 ou 17, dans laquelle la source lumineuse (34) comprend une lentille de focalisation (54) de sa lumière émise.

19. Installation (30, 30') selon l'une quelconque des revendications 13 à 18, comprenant en outre un dispositif de support (26), notamment un chevalet, pour le stockage des feuilles (10, 10') en position sensiblement verticale, le dispositif de support (26) comportant une surface de repos (28) sensiblement horizontale définissant un plan de repos (P2).

20. Installation (30) selon la revendication 19, dans laquelle le système d'imagerie optique (32) est placé sous le plan de repos (P2).

21. Installation (30') selon la revendication 19 et l'une quelconque des revendications 16 à 18, dans laquelle la source lumineuse (34) est placée sous le plan de repos (P2).

## Patentansprüche

1. Verfahren zum Erfassen von Bildern von Codes (24), die auf einer Vielzahl von transparenten Platten (10₁, ...10_{N}, 10'), beispielsweise Glasplatten, markiert sind, die jeweils zwei gegenüberliegende Flächen (12, 14) und mindestens eine angrenzende Hauptseitenkante (20, 16') und eine angrenzende sekundäre Seitenkante (16, 20') aufweisen, wobei jeder Code (24, 24') auf einer Fläche (12, 14) oder in der Dicke einer Platte (10, 10') nahe der Hauptseitenkante (20, 16') der Platte (10, 10') markiert ist, wobei die Platten (10, 10') einander zugewandt mit ihren Hauptseitenkanten (20, 16') im Wesentlichen in der gleichen Richtung ausgerichtet angeordnet sind, wobei das Verfahren eine Anlage (30, 30') implementiert, die ein optisches Abbildungssystem (32) enthält, das den Hauptseitenkanten (20, 16') der Platten (10, 10') zugewandt positioniert und in einer Bewegungsrichtung (X1, X1') translatorisch beweglich ist, das optische Abbildungssystem (32) umfassend mindestens eine Kamera (40) und mindestens eine mit einer reflektierenden Oberfläche (48) versehene Reflexionsvorrichtung (42), wobei die Betrachtungsrichtung (A) der Kamera (40) die reflektierende Oberfläche (48) schneidet und die Normale zu der reflektierenden Oberfläche (48) nicht justiert und in Bezug auf die Betrachtungsrichtung (A) der Kamera (40) geneigt ist, so dass ein Bild von mindestens einem Teil einer Hauptseitenkante (20, 16') einer Platte (10, 10') durch die reflektierende Oberfläche (48) in Richtung der Kamera (40) reflektiert werden kann, das Verfahren umfassend die Bewegung des optischen Abbildungssystems (32) entlang der Bewegungsrichtung (X1, X1') in eine Vielzahl von Positionen, die jeweils einer Platte (10, 10') von Rang 1, ...n, ..., N entsprechen, und in jeder Position einen Schritt einer Bilderfassung des Codes (24, 24') der Platte (10, 10') des Ranges 1, ... n, ..., N durch die Hauptseitenkante (20, 16') der Platte (10, 10').

2. Verfahren nach Anspruch 1, wobei jeder Code (24, 24') auf einer Fläche (12, 14) oder in der Dicke einer Platte in einem Abstand (D1) von weniger als 10 mm, vorzugsweise höchstens 7 mm, vorzugsweise höchstens 5 mm, noch mehr bevorzugt höchstens 4 mm von der Hauptseitenkante (20, 16') der Platte (10, 10') markiert ist.

3. Verfahren nach Anspruch 1 oder 2, wobei die Anlage (30, 30') ferner mindestens eine Lichtquelle (34) umfasst und die mindestens eine Lichtquelle (34) während des Schrittes der Bilderfassung des Codes (24) der Platte des Rangs n mindestens die sekundäre Seitenkante (16, 20') der Platte (10, 10') des Rangs n beleuchtet.

4. Verfahren nach Anspruch 3, wobei die Lichtquelle (34) in Translation mit dem optischen Abbildungssystem (32) fest verbunden ist.

5. Verfahren nach Anspruch 3 oder 4, wobei das durch die Lichtquelle (34) emittierte Licht mittels einer Fokussierlinse (54) auf die sekundäre Seitenkante (16, 20') jeder Glasplatte (10, 10') fokussiert wird.

6. Verfahren nach einem der Ansprüche 1 bis 5, wobei die Kamera (32) mit einem Objektiv mit einstellbarer Brennweite und/oder einstellbarer Blende versehen ist.

7. Verfahren nach Anspruch 6, wobei die Brennweite des Objektivs automatisch eingestellt wird, insbesondere vor allen Erfassungsschritten oder vor jedem Bilderfassungsschritt.

8. Verfahren nach Anspruch 6 oder 7, wobei die Blende des Objektivs automatisch eingestellt wird, insbesondere vor allen Erfassungsschritten oder vor jedem Bilderfassungsschritt.

9. Verfahren nach einem der Ansprüche 1 bis 8, wobei die Reflexionsvorrichtung (42) drehbeweglich um eine Achse (50) montiert ist und das Verfahren mindestens einen Schritt eines Anpassens der Neigung (β) der reflektierenden Oberfläche (48) in Bezug auf die optische Achse (A) der Kamera (40) umfasst, insbesondere vor allen Erfassungsschritten oder vor jedem Bilderfassungsschritt.

10. Verfahren nach einem der Ansprüche 1 bis 9, wobei die Platten (10) in einer im Wesentlichen vertikalen Position auf einer Trägervorrichtung (26), insbesondere einem Gestell, das eine im Wesentlichen horizontale Auflagefläche (28) aufweist, gelagert werden, wobei die Platten auf der Auflagefläche (28) mit ihren Hauptseitenkanten (20) in Richtung der Oberfläche (28) ausgerichtet ruhen.

11. Verfahren nach einem der Ansprüche 1 bis 9, wobei die Platten (10') in einer im Wesentlichen vertikalen Position auf einer Trägervorrichtung (26), insbesondere einem Gestell, das eine im Wesentlichen horizontale Auflagefläche (28) aufweist, gelagert werden, wobei die Platten (10') auf der Auflagefläche (28) mit ihren sekundären Seitenkanten (20) in Richtung der Oberfläche (28) ausgerichtet ruhen.

12. Verfahren nach einem der Ansprüche 1 bis 11, ferner umfassend die Verarbeitung jedes erfassten Bildes durch einen Computer, der programmiert ist, um die Informationen zu extrahieren, die in mindestens einem auf dem Bild sichtbaren Code vorhanden sind.

13. Anlage (30, 30') zum Erfassen von Bildern von Codes (24), die auf einer Vielzahl von transparenten Platten (10₁, ...10_{N}, 10'), beispielsweise Glasplatten, markiert sind, die jeweils zwei gegenüberliegende Flächen (12, 14) und mindestens eine angrenzende Hauptseitenkante (20, 16') und eine angrenzende sekundäre Seitenkante (16, 20') aufweisen, wobei jeder Code (24, 24') auf einer Fläche (12, 14) oder in der Dicke einer Platte (10, 10') nahe der Hauptseitenkante (20, 16') der Platte (10, 10') markiert ist, wobei die Platten (10, 10') einander zugewandt mit ihren Hauptseitenkanten (20, 16') im Wesentlichen in der gleichen Richtung ausgerichtet angeordnet sind, wobei die Anlage (30, 30') insbesondere für die Implementierung eines Verfahrens nach einem der Ansprüche 1 bis 12 ausgelegt ist und die Anlage **dadurch gekennzeichnet ist, dass** sie ein optisches Abbildungssystem (32) enthält, das in einer Bewegungsrichtung (X1, X1') translatorisch beweglich ist, das optische Abbildungssystem (32) umfassend mindestens eine Kamera (40) und mindestens eine mit einer reflektierenden Oberfläche (48) versehene Reflexionsvorrichtung (42), wobei die Betrachtungsrichtung (A) der Kamera (40) die reflektierende Oberfläche (48) schneidet und die Normale zu der reflektierenden Oberfläche (48) nicht justiert und in Bezug auf die Betrachtungsrichtung (A) der Kamera (32) geneigt ist, wobei das optische Abbildungssystem (32) dazu ausgelegt ist, sich entlang der Bewegungsrichtung (X1, X1') in eine Vielzahl von Erfassungspositionen zu bewegen, die jeweils einer Platte des Ranges 1, ...n, ..., N entsprechen, und in jeder Erfassungsposition ein Bild des Codes (24, 24') der Platte des Ranges 1, ... n, ..., N durch die Hauptseitenkante (20, 16') der Platte (10, 10') zu erfassen.

14. Anlage (30, 30') nach Anspruch 13, ferner umfassend einen Computer (60), der dazu ausgelegt ist, jedes erfasste Bild zu verarbeiten, und programmiert ist, um die in mindestens einem auf dem Bild sichtbaren Code (24, 24') vorhandenen Informationen zu extrahieren.

15. Anlage (30, 30') nach Anspruch 13 oder 14, wobei das optische Abbildungssystem (32) entlang einer Schiene (46) translatorisch beweglich montiert ist.

16. Anlage (30, 30') nach einem der Ansprüche 13 bis 15, ferner umfassend eine Lichtquelle (34), die in einer Richtung leuchtet, die im Wesentlichen orthogonal zu der Bewegungsrichtung (X1, X1') ist.

17. Verfahren (30, 30') nach Anspruch 16, wobei die Lichtquelle (34) in Translation mit dem optischen Abbildungssystem (32) fest verbunden ist.

18. Anlage (30, 30') nach Anspruch 16 oder 17, wobei die Lichtquelle (34) eine Linse (54) zum Fokussieren ihres emittierten Lichts umfasst.

19. Anlage (30, 30') nach einem der Ansprüche 13 bis 18, ferner umfassend eine Trägervorrichtung (26), insbesondere ein Gestell, zum Lagern der Platten (10, 10') in einer im Wesentlichen vertikalen Position, wobei die Trägervorrichtung (26) eine im Wesentlichen horizontale Auflagefläche (28) umfasst, die eine Auflageebene (P2) definiert.

20. Anlage (30) nach Anspruch 19, wobei das optische Abbildungssystem (32) unter der Auflageebene (P2) platziert ist.

21. Anlage (30') nach Anspruch 19 und nach einem der Ansprüche 16 bis 18, wobei die Lichtquelle (34) unter der Auflageebene (P2) platziert ist.

## Claims

1. Method for acquiring images of codes (24) marked on a plurality of transparent sheets (10₁, ... 10_{N}, 10'), e.g. sheets of glass, each having two opposite sides (12, 14) and at least one adjacent primary lateral edge (20, 16') and one adjacent secondary lateral edge (16, 20'), each code (24, 24') being marked on one side (12, 14) or in the thickness of a sheet (10, 10'), near the main lateral edge (20, 16') of said sheet (10, 10'), the sheets (10, 10') being arranged opposite each other with their main lateral edges (20, 16') oriented substantially in the same direction, the method implementing an installation (30, 30') comprising an optical imaging system (32) positioned opposite the main lateral edges (20, 16') of the sheets (10, 10') and mobile in translation in a direction of displacement (X1, X1'), the optical imaging system (32) comprising at least one camera (40) and at least one reflective device (42) provided with a reflecting surface (48), in which the viewing direction (A) of the camera (40) intersects the reflecting surface (48), and the normal to the reflecting surface (48) is not aligned and inclined with respect to the viewing direction (A) of the camera (40) so that an image of at least part of a main lateral edge (20, 16') of a sheet (10, 10') can be reflected by said reflective surface (48) to the camera (40), the method comprising the movement of the optical imaging system (32), according to the direction of travel (X1, X1'), in a plurality of positions corresponding respectively to a sheet (10, 10(') of rank 1, ... n, ..., N, and, in each position, a step of acquiring image of the code (24, 24') of said sheet (10, 10') of rank 1, ... n, ..., N through the main lateral edge (20, 16') of said sheet (10, 10').

2. The method of claim 1, wherein each code (24, 24 ') is marked on one side (12, 14) or in the thickness of a sheet, at a distance (D1) from the main lateral edge (20, 16 ') of said sheet (10, 10 ') less than 10mm, preferably not more than 7 mm, preferably at most 5 mm, even more preferably at most 4 mm.

3. The method of claim 1 or 2, wherein the installation (30, 30 ') further comprises at least one light source (34), and said at least one light source (34) illuminates at least the secondary side edge (16, 20') of the sheet (10, 10') of row n during the image acquisition step of code (24) of said sheet of rank n.

4. The method of claim 3, wherein the light source (34) is connected in translation to the optical imaging system (32).

5. The method of claim 3 or 4, wherein the light emitted by the light source (34) is focused on the secondary lateral edge (16, 20 ') of each sheet of glass (10, 10 ') by means of a focusing lens (54).

6. The method according to any one of claims 1 to 5, wherein the camera (32) is provided with an adjustable focal length lens and / or adjustable aperture.

7. The method of claim 6, wherein the focal length of the lens is adjusted automatically, especially before all the acquisition steps or before each image acquisition step.

8. The method of claim 6 or 7, wherein the aperture of the lens is adjusted automatically, especially before all the acquisition steps or before each image acquisition step.

9. The method according to any one of claims 1 to 8, wherein the reflective device (42) is mounted movable rotating around an axis (50), and the method comprises at least one step of adjusting the inclination (β) of the reflecting surface (48) with respect to the optical axis (A) of the camera (40), in particular before all the acquisition steps or before each image acquisition step.

10. The method according to any one of claims 1 to 9, wherein the sheets (10) are stored in a substantially vertical position on a support device (26), in particular an easel, having a substantially horizontal rest surface (28), the sheets being supported on said rest surface (28) with their main lateral edges (20) oriented towards said surface (28).

11. The method according to any one of claims 1 to 9, wherein the sheets (10') are stored in a substantially vertical position on a support device (26), in particular an easel, having a substantially horizontal rest surface (28), the sheets (10') being supported on said rest surface (28) with their secondary side edges (20') oriented towards said surface (28).

12. The method according to any one of claims 1 to 11, further comprising the processing of each image acquired by a computer programmed to extract the information present in at least one code visible on the image.

13. Installation (30, 30') for the acquisition of images of a plurality of codes (24) marked on a plurality of transparent sheets (10₁, ... 10_{N}, 10'), in particular sheets of glass, each having two opposite sides (12, 14) and at least one adjacent main lateral edge (20, 16') and one secondary lateral edge (16, 20'), each code (24, 24') being marked on one side (12, 14) or in the thickness of a sheet (10, 10'), close to the main lateral edge (20, 16') of said sheet (10, 10'), the sheets (10, 10') being arranged opposite each other with their main lateral edges (20, 16') oriented substantially in the same direction, the installation (30, 30') being in particular suitable for the implementation of a method according to any one of claims 1 to 12, and the installation comprising a mobile optical imaging system (32) in translation in a direction of displacement (X1, X1'), the optical imaging system (32) comprising at least one camera (40) and at least one reflective device (42) with a reflecting surface (48), in which the viewing direction (A) of the camera (40) intersects the reflecting surface (48), and the normal to the reflecting surface (48) is not aligned and inclined with respect to the viewing direction (A) of the camera (32), the optical imaging system (32) being adapted to move, according to the direction of movement (X1, X1'), in a plurality of acquisition positions corresponding respectively to a sheet of rank 1, ... n, ..., N, and, in each acquisition position, to acquire an image of the code (24, 24') of said sheet of rank 1, ... n, ..., N through the main lateral edge (20, 16') of said sheet (10, 10').

14. Installation (30, 30 ') according to claim 13, further comprising a computer (60) adapted to process each image acquired and programmed to extract the information present in at least one code (24, 24 ') visible on the image.

15. Installation (30, 30 ') according to claim 13 or 14, wherein the optical imaging system (32) is mounted movable in translation along a rail (46).

16. Installation (30, 30 ') according to any one of claims 13 to 15, further comprising a light source (34) illuminating in a direction substantially orthogonal to the direction of travel (X1, X1').

17. Installation (30, 30 ') according to claim 16, wherein the light source (34) is connected in translation to the optical imaging system (32).

18. Installation (30, 30 ') according to claim 16 or 17, wherein the light source (34) comprises a focusing lens (54) of its emitted light.

19. Installation (30, 30 ') according to any one of claims 13 to 18, further comprising a support device (26), in particular an easel, for storing sheets (10, 10 ') in substantially vertical position, the support device (26) comprising a resting surface (28) substantially horizontal defining a rest plan (P2).

20. Installation (30) according to claim 19, wherein the optical imaging system (32) is placed under the rest plane (P2).

21. Installation (30') according to claim 19 and any one of claims 16 to 18, wherein the light source (34) is placed under the rest plane (P2).
